(19) **Europäisches Patentamt European Patent Office Office européen des brevets**

(11) **EP 4 334 523 B1**

(12) **FASCICULE DE BREVET EUROPEEN**

(45) Date de publication et mention de la délivrance du brevet:
**24.12.2025 Bulletin 2025/52**

(21) Numéro de dépôt: **22721816.1**

(22) Date de dépôt: **11.04.2022**

(51) Classification Internationale des Brevets (IPC):
**D07B 1/06** *(2006.01)* **B60C 9/00** *(2006.01)*

(52) Classification Coopérative des Brevets (CPC):
(C-Sets disponibles)
**D07B 1/0613; B60C 9/0007;** B60C 2009/2077;
B60C 2200/065; D07B 1/0626; D07B 1/0633;
D07B 1/165; D07B 2201/1044; D07B 2201/1068;
D07B 2201/1076; D07B 2201/2006;
D07B 2201/2029; D07B 2201/203;
D07B 2201/2032; D07B 2201/2051;        (Cont.)

(86) Numéro de dépôt international:
**PCT/FR2022/050673**

(87) Numéro de publication internationale:
**WO 2022/234201 (10.11.2022 Gazette 2022/45)**

(54) **CÂBLE MULTI-TORONS À DEUX COUCHES À ÉNERGIE DE RUPTURE SURFACIQUE AMÉLIORÉE**

ZWEISCHICHTIGES MEHRLITZIGES KABEL MIT VERBESSERTER BRUCHFLÄCHENENERGIE

TWO-LAYER MULTI-STRAND CABLE HAVING IMPROVED FRACTURE SURFACE ENERGY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.05.2021 FR 2104820**

(43) Date de publication de la demande:
**13.03.2024 Bulletin 2024/11**

(73) Titulaire: **COMPAGNIE GENERALE DES ETABLISSEMENTS MICHELIN 63000 Clermont-Ferrand (FR)**

(72) Inventeurs:
• **CHEVALLEY, Marianna 63040 CLERMONT-FERRAND Cedex 9 (FR)**

• **LAURENT, Stéphane 63040 CLERMONT-FERRAND Cedex 9 (FR)**
• **BARBAT, Romain 63040 CLERMONT-FERRAND Cedex 9 (FR)**
• **GIANETTI, Alexandre 63040 CLERMONT-FERRAND Cedex 9 (FR)**
• **RENAUX, Benoît 63040 CLERMONT-FERRAND Cedex 9 (FR)**

(74) Mandataire: **M.F.P. Michelin DCJ/PI - F35 - Ladoux 23 place des Carmes-Déchaux 63040 Clermont-Ferrand Cedex 9 (FR)**

(56) Documents cités:
WO-A1-2019/243691    WO-A1-2021/099712
WO-A1-2021/260303    US-A1- 2020 115 850

**(Cont. page suivante)**

(52) Classification Coopérative des Brevets (CPC):
(Cont.)D07B 2201/2059; D07B 2201/2061;
D07B 2201/2065; D07B 2207/4072;
D07B 2401/2005; D07B 2401/207; D07B 2401/208

C-Sets
D07B 2201/2051, D07B 2801/12;
D07B 2201/2059, D07B 2801/12;
D07B 2201/2061, D07B 2801/12, D07B 2801/24;
D07B 2201/2065, D07B 2801/24

**Description**

L'invention concerne des câbles et un pneumatique comprenant ces câbles.

On connait de l'état de la technique, notamment du document WO2016017655 un pneumatique pour véhicule de génie civil à armature de carcasse radiale comprenant une bande de roulement, deux bourrelets inextensibles, deux flancs reliant les bourrelets à la bande de roulement et une armature de sommet, disposée circonférentiellement entre l'armature de carcasse et la bande de roulement. Cette armature de sommet comprend quatre nappes renforcées par des éléments de renforts tels que des câbles métalliques, les câbles d'une nappe étant noyés dans une matrice élastomérique de la nappe.

Cette armature de sommet comprend plusieurs nappes de travail comprenant plusieurs éléments filaires de renfort. Chaque élément filaire de renfort de travail est un câble multi-torons à deux couches présentant une couche interne du câble constituée de K=1 toron interne à deux couches comprenant une couche interne constituée de Q=3 fils métalliques internes de diamètre d1= 0,25 mm et une couche externe constituée de N= 8 fils métalliques externes de diamètre d3= 0,33 mm enroulés autour de la couche interne ; une couche externe du câble constituée de L= 6 torons externes à deux couches comprenant une couche interne constituée de Q'= 3 fils métalliques internes de diamètre d1'=0,29 mm et une couche externe constituée de N'=9 fils métalliques externes de diamètre d3'=0,29 mm enroulés autour de la couche interne. Le diamètre du câble non fretté est égal à 3,72 mm pour une force à rupture de 17 572 N.

On connaît également de l'état de la technique des câbles tels que définis dans WO2019243691.

D'une part, lors du passage du pneumatique sur des obstacles, par exemple sous la forme de cailloux, ces obstacles risquent de perforer le pneumatique jusqu'à atteindre l'armature de sommet. Ces perforations permettent l'entrée d'agents corrosifs dans l'armature de sommet du pneumatique et en réduisent la durée de vie.

D'autre part, on a observé que les câbles des nappes sommet peuvent présenter des ruptures consécutives à des déformations et des efforts relativement importants exercés sur le câble, notamment lors du passage du pneumatique sur des obstacles.

L'invention a pour objet un câble permettant de réduire, voire de supprimer, le nombre de rupture et le nombre de perforation.

A cet effet l'invention a pour objet un câble multi-torons à deux couches, comprenant :

- une couche interne du câble constituée de K=1 toron interne à deux couches comprenant :

    - une couche interne constituée de Q=2,3 ou 4 fils métalliques internes , et
    - une couche externe constituée de N fils métalliques externes de diamètre d3 enroulés autour de la couche interne,

- une couche externe du câble constituée de L>1 torons externes à trois couches enroulés autour de la couche interne du câble comprenant :

    - une couche interne constituée de Q' fil(s) métallique(s) interne(s),

- une couche intermédiaire constituée de M' fils métalliques intermédiaires enroulés autour de la couche interne , et

    - une couche externe constituée de N' fils métalliques externes de diamètre d3' enroulés autour de la couche intermédiaire, dans lequel le câble présente une énergie à rupture surfacique ES $\geq$ 155 N.mm$^{-1}$ avec

$$ES= \sum_{i=1}^{Nc} F_{mi} \text{ x } \sum_{i=1}^{Nc} A_{ti} / Nc \text{ x Cfrag / D}$$ où:

- $\sum_{i=1}^{Nc} F_{mi}$ est la somme des forces à rupture pour les Nc fils en Newton;
- Nc = Q+N+L x(Q'+M' + N') est le nombre total de fils métalliques ;
- D est le diamètre du câble en mm ;
- $\sum_{i=1}^{Nc} A_{ti}$ est la somme de l'allongement total des Nc fils sans unité ;
- Cfrag est le coefficient de fragilisation du câble sans unité avec

$$C_{frag} = 1 - \left( \frac{\sin(\alpha_f)}{d3 \times d3'} \times \frac{(\Sigma_{i=1}^{Q'+M'+N'} F_{mi}) \times \sin(\alpha t)}{N \times Cste} \right)$$

où :

d3 et d3' sont exprimés en mm,

$\alpha f$ est l'angle de contact entre les fils métalliques externes du toron interne et les fils métalliques externes des torons externes exprimé en radian,

$\alpha t$ est l'angle d'hélice de chaque toron externe (TE) exprimé en radian ;

Cste = 1500 N.mm$^{-2}$.

Grâce à son énergie de rupture surfacique relativement élevée, le câble selon l'invention permet de réduire les perforations et donc d'allonger la durée de vie du pneumatique et également de réduire le nombre de rupture. En effet, les inventeurs à l'origine de l'invention ont découvert que le critère déterminant pour réduire les ruptures du câble n'était pas uniquement la force à rupture comme cela est largement enseigné dans l'état de la technique mais l'énergie à rupture surfacique représentée dans la présente demande par un indicateur égal au produit de la force à rupture, de l'allongement à rupture et du coefficient de fragilisation du câble divisé par le diamètre du câble.

Le coefficient de fragilisation permet de prendre en compte la perte de rendement du câble en traction dû à la fragilisation transverse dans les contacts inter-fils au niveau des fils métalliques externes de la couche interne et de la couche externe. Ce coefficient de fragilisation dépend du nombre de fils métalliques externes de la couche interne, de l'angle de contact entre le toron interne et le ou chaque toron externe, des diamètres d3 et d3' respectivement des fils métalliques externes de la couche interne et des fils métalliques externes de la couche externe, de l'angle d'hélice d'un toron externe et de la force à rupture d'un toron externe. Ainsi un câble solide aura un coefficient de fragilisation proche de 1 et un câble fragilisé aura un coefficient de fragilisation non optimal, plutôt proche de 0,5.

En effet, les câbles de l'état de la technique présentent soit une force à rupture relativement élevée mais un coefficient de fragilisation pas optimal, soit un coefficient de fragilisation, optimal, c'est-à-dire proche de 1 mais une force à rupture relativement faible comme l'exemple 8 de WO2016017655. Dans les deux cas, les câbles de l'état de la technique présentent une énergie à rupture surfacique relativement faible. Le câble selon l'invention, du fait de son coefficient de fragilisation et de sa force à rupture relativement élevés présente un allongement à rupture relativement élevé ainsi qu'une énergie de rupture surfacique relativement élevée.

Tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

Par définition, le diamètre d'un toron est le diamètre du plus petit cercle dans lequel est circonscrit le toron.

Par définition, le diamètre du câble est le diamètre du plus petit cercle dans lequel est circonscrit le câble sans la frette.

Dans l'invention, le câble est à deux couches de torons, c'est-à-dire qu'il comprend un assemblage constitué de deux couches de torons, ni plus ni moins, c'est-à-dire que l'assemblage a deux couches de torons, pas une, pas trois, mais uniquement deux.

Dans un mode de réalisation, le toron interne du câble est entouré d'une composition polymérique puis de la couche externe.

Avantageusement, le toron interne est à couches cylindriques.

Avantageusement, chaque toron externe est à couches cylindriques.

De façon très avantageuse, le toron interne et chaque toron externe sont à couches cylindriques. On rappelle que de telles couches cylindriques sont obtenues lorsque les différentes couches d'un toron sont enroulées à des pas différents et/ou lorsque les sens d'enroulement de ces couches sont distincts d'une couche à l'autre. Un toron à couches cylindriques est très fortement pénétrable contrairement à un toron à couches compactes dans lequel les pas de toutes les couches sont égaux et les sens d'enroulement de toutes les couches sont identiques qui présente une pénétrabilité bien plus faible.

Le toron interne est à deux couches. Le toron interne comprend un assemblage de fils constitué de deux couches de fils, ni plus ni moins, c'est-à-dire que l'assemblage de fils a deux couches de fils, pas une, pas trois, mais uniquement deux.

Le toron externe est à trois couches. Le toron externe comprend un assemblage de fils constitué de trois couches de fils, ni plus ni moins, c'est-à-dire que l'assemblage de fils a trois couches de fils, pas deux, pas quatre, mais uniquement trois.

On rappelle que, de manière connue, le pas d'un toron représente la longueur de ce toron, mesurée parallèlement à l'axe du câble, au bout de laquelle le toron ayant ce pas effectue un tour complet autour dudit axe du câble. De façon analogue, le pas d'un fil représente la longueur de ce fil, mesurée parallèlement à l'axe du toron dans lequel il se trouve, au bout de laquelle le fil ayant ce pas effectue un tour complet autour dudit axe du toron.

Par sens d'enroulement d'une couche de torons ou de fils, on entend le sens formé par les torons ou les fils par rapport à l'axe du câble ou du toron. Le sens d'enroulement est communément désigné par la lettre soit Z, soit S.

Les pas, sens d'enroulement et diamètres des fils et des torons sont déterminés conformément à la norme ASTM D2969-04 de 2014.

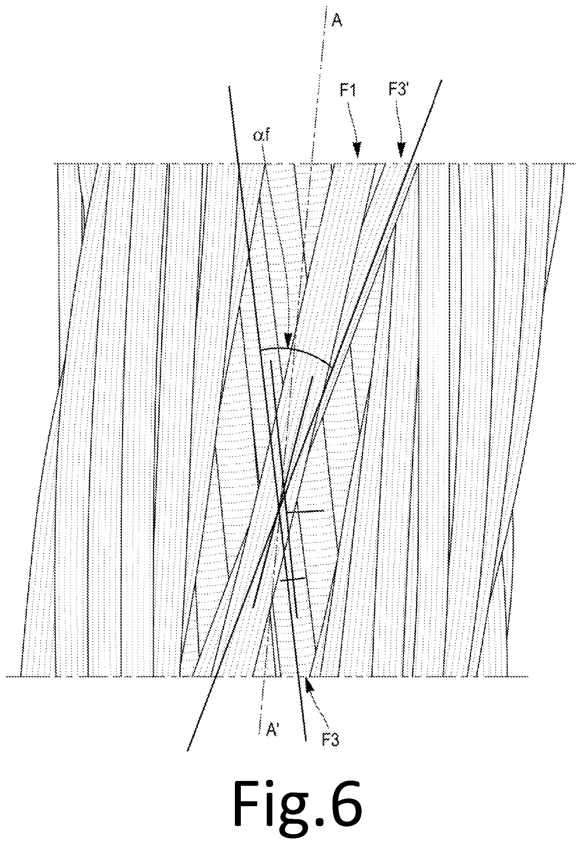

L'angle de contact entre les fils métalliques externes du toron interne et les fils métalliques externes des torons externes est l'angle αf représenté sur la figure 6. Sur cette représentation schématique du câble selon l'invention, on a représenté l'axe A-A' du câble autour duquel la couche interne et la couche externe sont enroulées. Dans cette représentation, on a gardé seulement 2 fils métalliques de la couche externe du toron externe pour mieux visualiser l'angle αf qui est l'angle de contact entre le fil métallique externe du toron interne et le fil métallique externe du toron externe. C'est un des paramètres pertinents pour déterminer le coefficient de fragilisation du câble car plus l'angle de contact est faible moins la fragilisation du câble est importante.

L'angle d'hélice de chaque toron externe αt est une grandeur bien connue de l'homme du métier et peut être déterminé par le calcul suivant : tan αt = 2xπ x Re/pe, formule dans laquelle pe est le pas exprimé en millimètres dans lequel chaque toron externe est enroulé, Re est le rayon d'hélice de chaque toron externe exprimé en millimètres, et tan désigne la fonction tangente. αt est exprimé en degrés.

Par définition, le rayon d'hélice Re de la couche externe du câble est le rayon du cercle théorique passant par les centres des torons externes de la couche externe dans un plan perpendiculaire à l'axe du câble.

L'allongement total At, grandeur bien connue de l'homme du métier, est déterminé par exemple en appliquant la norme ASTM D2969-04 de 2014 à un fil testé de façon à obtenir une courbe force-allongement. On déduit l'At sur la courbe obtenue comme l'allongement, en %, correspondant à la projection sur l'axe des allongements du point de rupture du fil sur la courbe force-allongement, c'est-à-dire le point auquel la charge croît jusqu'à une valeur maximale de force à rupture (Fm) puis décroît brusquement après la rupture. Lorsque la décroissance par rapport à la Fm dépasse un certain seuil cela signifie que la rupture du fil a eu lieu.

De préférence, les torons ne subissent pas de préformation.

Avantageusement, le câble est métallique. Par câble métallique, on entend par définition un câble formé de fils constitués majoritairement (c'est-à-dire pour plus de 50% de ces fils) ou intégralement (pour 100% des fils) d'un matériau métallique. Un tel matériau métallique est préférentiellement mis en oeuvre avec un matériau en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages.

Lorsqu'un acier au carbone est avantageusement utilisé, sa teneur en carbone (% en poids d'acier) est de préférence comprise entre 0,4% et 1,2%, notamment entre 0,5% et 1,1 % ; ces teneurs représentent un bon compromis entre les propriétés mécaniques requises pour le pneumatique et la faisabilité des fils.

Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc.

De préférence, les fils d'une même couche d'un toron prédéterminé (interne ou externe) présentent tous sensiblement le même diamètre. Avantageusement, les torons externes présentent tous sensiblement le même diamètre. Par « sensiblement le même diamètre», on entend que les fils ou les torons ont le même diamètre aux tolérances industrielles près.

Avantageusement, les torons externes sont enroulés en hélice autour du toron interne selon un pas pe allant de 40 mm à 100 mm et de préférence allant de 50 mm à 90 mm.

Le câble selon l'invention présente une énergie surfacique largement améliorée par rapport au câble de l'état de la technique qui présente une énergie surfacique de 120 N.mm$^{-1}$. Les inventeurs à l'origine de l'invention émettent l'hypothèse que plus on a de contacts inter-fils et plus particulièrement dans les zones inter-torons qui sont les plus sollicitantes c'est-à-dire plus on a de contact entre les fils métalliques externes du toron interne et les fils métalliques externes des torons externes, plus on dilue l'effort de fragilisation sur le nombre de contacts. Cet effort de contact est dépendant de l'effort que peut reprendre chaque toron c'est-à-dire de l'effort du câble divisé par le nombre de torons. Afin d'optimiser ces contacts, les inventeurs à l'origine de l'invention émettent l'hypothèse qu'il est nécessaire d'avoir de bonnes propriétés géométriques du contact et plus précisément de l'angle de contact entre les fils métalliques externes du toron interne et les fils métalliques externes des torons externes afin d'optimiser les contacts à l'intérieur du câble.

Avantageusement, ES ≥ 160 N.mm$^{-1}$, de préférence ES ≥ 165 N.mm$^{-1}$ et plus préférentiellement ES ≥ 170 N.mm$^{-1}$.

Avantageusement, la force à rupture $Fr = \sum_{i=1}^{Nc} F_{mi}$ x Cfrag est telle que Fr ≥ 25 000 N, de préférence Fr ≥ 26 000 N et plus préférentiellement Fr ≥ 28 000 N. La force à rupture est mesurée selon la norme ASTM D2969-04. Comme décrit précédemment, le câble présente une force à rupture relativement élevée de façon à maximiser l'énergie de rupture surfacique.

L'invention a également pour objet un câble extrait d'une matrice polymérique, le câble comprenant :

- une couche interne du câble constituée de K=1 toron interne à deux couches comprenant :

  - une couche interne constituée de Q= 2, 3 ou 4 fils métalliques interne(s), et
  - une couche externe constituée de N fils métalliques externes de diamètre d3 enroulés autour de la couche interne,

- une couche externe du câble constituée de L>1 torons externes à trois couches enroulés autour de la couche interne du câble comprenant :

  - une couche interne constituée de Q' fil(s) métallique(s) interne(s), et

- une couche intermédiaire constituée de M' fils métalliques intermédiaires enroulés autour de la couche interne , et

  - une couche externe constituée de N' fils métalliques externes de diamètre d3' enroulés autour de la couche intermédiaire, dans lequel le câble extrait présente une énergie à rupture ES' $\geq$ 150 N.mm$^{-1}$ avec

$$ES' = \sum_{i=1}^{Nc} F_{mi} \; x \; \sum_{i=1}^{Nc} A_{ti} / Nc \; x \; Cfrag' / D \quad \text{où:}$$

  - $\sum_{i=1}^{Nc} F_{mi}$ est la somme des forces à rupture pour les Nc fils en Newton;
  - Nc = Q+N+L x(Q'+M'+N') est le nombre total de fils métalliques ;
  - D est le diamètre du câble en mm ;
  - $\sum_{i=1}^{Nc} A_{ti}$ est la somme de l'allongement total des Nc fils sans unité ;
  - Cfrag' est le coefficient de fragilisation du câble sans unité avec

$$C_{frag}' = 1 - (2 - Cp) \times \left( \frac{\sin(\alpha_f)}{d3 \times d3'} \times \frac{(\sum_{i=1}^{Q'+M'+N'} F_{mi}) \times \sin(\alpha t)}{N \times Cste} \right)$$

où :

  Cp est le coefficient de pénétrabilité du câble
  d3 et d3' sont exprimés en mm,
  $\alpha f$ est l'angle de contact entre les fils métalliques externes du toron interne et les fils métalliques externes des torons externes exprimé en radian,
  $\alpha t$ est l'angle d'hélice des torons externes exprimé en radian;
  Cste = 1500 N.mm$^{-2}$.

De préférence, ES' $\geq$ 155 N.mm$^{-1}$ et plus préférentiellement ES' $\geq$ 160 N.mm$^{-1}$.

L'allongement total At du câble extrait est mesuré d'une façon analogue à l'allongement total At du câble défini précédemment.

Le coefficient de fragilisation Cfrag' prend en compte la pénétration du câble par la matrice polymérique à l'aide du coefficient de pénétration inter-torons Cp. Pour calculer ce coefficient de pénétration, on opère une coupe transversale du câble extrait à la scie. On réitère cette opération dix fois pour obtenir dix coupes transversales sur lesquelles on va calculer un coefficient de pénétration Cp moyen. On observe ensuite au microscope électronique les zones de remplissage de la composition polymérique de chaque câble extrait en quantifiant à l'aide d'un logiciel de traitement d'image le ratio de la surface non métal sans composition polymérique sur la surface remplie de composition polymérique dans la zone de contact entre les torons externes et le toron interne. Ainsi un câble bien pénétré aura un coefficient de pénétration proche de 1 et un câble moins bien pénétré aura un coefficient de pénétration proche de 0,5.

De préférence, la matrice polymérique est une matrice élastomérique.

La matrice polymérique, de préférence élastomérique, est à base d'une composition polymérique, de préférence élastomérique.

Par matrice polymérique, on entend une matrice comprenant au moins un polymère. La matrice polymérique est ainsi à base d'une composition polymérique.

Par matrice élastomérique, on entend une matrice comprenant au moins un élastomère. La matrice élastomérique préférentielle est ainsi à base de la composition élastomérique.

Par l'expression "à base de", il faut entendre que la composition comporte le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par composition polymérique, on entend que la composition comprend au moins un polymère. De préférence, un tel polymère peut être un thermoplastique, par exemple un polyester ou un polyamide, un polymère thermodurcissable, un élastomère, par exemple du caoutchouc naturel, un élastomère thermoplastique ou un mélange de ces polymères

Par composition élastomérique, on entend que la composition comprend au moins un élastomère et au moins un autre composant. De préférence, la composition comprenant au moins un élastomère et au moins un autre composant comprend un élastomère, un système de réticulation et une charge. Les compositions utilisables pour ces nappes sont des compositions conventionnelles pour calandrage d'éléments filaires de renfort et comprennent un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou retardateur de vulcanisation et/ou divers additifs. L'adhésion entre les fils métalliques et la matrice dans laquelle ils sont noyés est assurée par exemple par un revêtement métallique, par exemple une couche de laiton.

Les valeurs des caractéristiques décrites dans la présente demande pour le câble extrait sont mesurées sur ou déterminées à partir de câbles extrait d'une matrice polymérique, notamment élastomérique, par exemple d'un pneumatique. Ainsi, par exemple sur un pneumatique, on retire la bande de matière radialement à l'extérieur du câble à extraire de façon à apercevoir le câble à extraire affleurer radialement de la matrice polymérique. Ce retrait peut se faire par décorticage au moyen de pinces et de couteaux ou bien par rabotage. Puis, on dégage l'extrémité du câble à extraire au moyen d'un couteau. Puis, on tire sur le câble de façon à l'extraire de la matrice en appliquant un angle relativement faible de façon à ne pas plastifier le câble à extraire. Les câbles extraits sont alors nettoyés soigneusement, par exemple au moyen d'un couteau, de façon à détacher les restes de matrice polymérique accrochés localement au câble et en prenant soin de ne pas dégrader la surface des fils métalliques.

Avantageusement, le câble extrait présente une force à rupture Fr' telle que $Fr' = \sum_{i=1}^{Nc} F_{mi} \times Cfrag'$ telle que $Fr' \geq 24\,000$ N, de préférence $Fr' \geq 25\,000$ N et plus préférentiellement $Fr' \geq 27\,000$ N. La force à rupture est mesurée sur le câble extrait selon la norme ASTM D2969-04.

Les caractéristiques avantageuses décrites ci-dessous s'appliquent indifféremment au câble tel que défini ci-dessus et au câble extrait.

De façon préférée, le câble présente un diamètre D tel que $D \leq 6,0$ mm, de préférence tel que $5,0$ mm $\leq D \leq 5,5$ mm. Le diamètre D est mesuré sur le câble selon la norme ASTM D2969-04.

De préférence, $\alpha f$ est supérieur ou égal à 0° et de préférence supérieur ou égal à 5°.

De préférence, $\alpha f$ est inférieur ou égal à 25° et de préférence inférieur ou égal à 20°.

Sur cette plage d'angle de contact allant de 0° à 25°, la zone de contact est maximale et le câble est relativement bien pénétré par la composition polymérique.

De préférence, $\alpha t$ est supérieur ou égal à 0° et de préférence supérieur ou égal à 5°.

De préférence, $\alpha t$ est inférieur ou égal à 20°, de préférence inférieur ou égal à 15° et plus préférentiellement inférieur ou égal à 10°.

Sur cette plage d'angle d'hélice, on minimise les efforts de contacts entre torons externes et le toron interne lors de la mise en traction du câble.

De préférence, d1, d1', d2', d3, d3' vont, indépendamment les uns des autres, de 0,25 mm à 0,50 mm, de préférence de 0,30 mm à 0,45 mm et plus préférentiellement de 0,32 mm à 0,42 mm.

Avantageusement, la couche externe du câble est saturée de sorte que la distance inter-torons des torons externes définie, sur une section du câble perpendiculaire à l'axe principal du câble, comme la distance la plus courte qui sépare, en moyenne, les enveloppes circulaires dans lesquelles sont inscrits deux torons externes adjacents soit inférieure strictement à 20 $\mu$m.

Par définition, une couche de câble saturée est telle que la distance inter-torons des torons externes est inférieure strictement à 20 $\mu$m. La distance inter-torons de la couche externe de torons externes est définie, sur une section du câble perpendiculaire à l'axe principal du câble, comme la distance la plus courte qui sépare, en moyenne, les enveloppes circulaires dans lesquelles sont inscrits deux torons externes adjacents. Ainsi, cette construction du câble permet d'assurer une bonne stabilité architecturale de la couche externe et la saturation de la couche externe permet de s'assurer que la couche externe comprend un nombre relativement élevé de torons externes et donc présente une force à rupture relativement élevée.

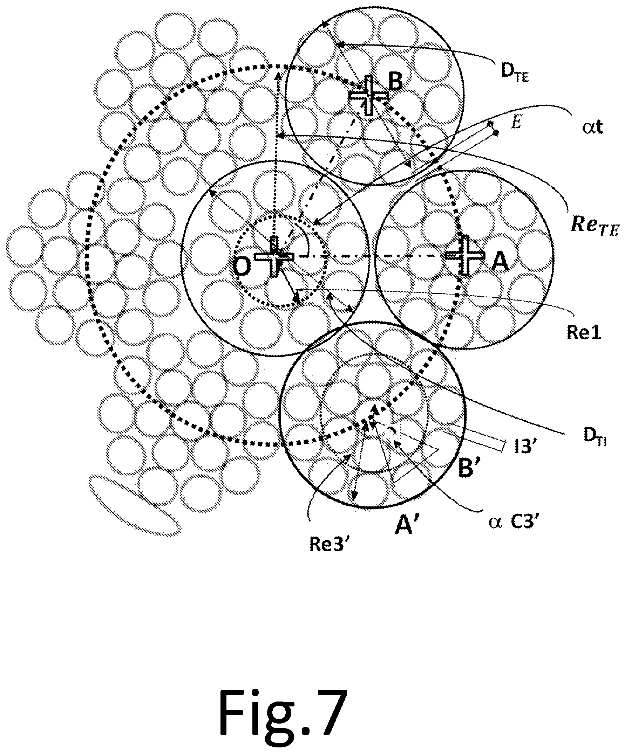

La distance inter-torons E est la distance entre les 2 centres de 2 torons externes adjacents, les points A et B tels que présentés sur la figure 7, moins le diamètre du toron externe.

De préférence, les fils d'une même couche d'un toron prédéterminé (interne ou externe) présentent tous sensiblement le même diamètre. Avantageusement, les torons externes présentent tous sensiblement le même diamètre. Par « sensiblement le même diamètre», on entend que les fils ou les torons ont le même diamètre aux tolérances industrielles près.

Pour cela, en se plaçant dans un repère 2D orthonormal, c'est-à-dire en suivant la coupe transverse du câble, en prenant OA pour la direction de l'axe des abscisses avec O le centre du câble et dans le cas où les torons externes présentent tous sensiblement le même diamètre, on calcule les coordonnées des centres de 2 torons A et B : A= [$Re_{TE}$, 0], B= [$Re_{TE}$ x cos (2π/L) ; ReTE x sin( 2π/L)] avec L, le nombre de torons externes, $Re_{TE}$ le rayon d'hélice de chaque toron externe exprimé en millimètres.

Le rayon d'hélice de chaque toron externe est calculé selon la formule suivante : $Re_{TE}$ = max (Re_minTE ; ReTEinsaturé) avec

Re minTE est le rayon d'enroulement qu'on obtient en cas de sursaturation de la couche. C'est le rayon minimum pour que tous les torons soient en contact.

$$Re\_min\ TE = 1/[( sin^2(π/L)/D_{TE}/2)^2-cos^2(π/L) \times (2\ π/pe)^2]$$

avec L : le nombre de torons externes, pe est le pas exprimé en millimètres dans lequel chaque toron externe est enroulé et $D_{TE}$ le diamètre du toron externe en mm, et $Re_{TE\ insaturé}$ correspond à une architecture insaturée ou strictement saturée, $Re_{TE\ insaturé}$ = $D_{TI}$/2 + $D_{TE}$/2 avec DTI le diamètre du toron interne en mm et $D_{TE}$ le diamètre du toron externe en mm.

Le diamètre du toron externe est calculé comme suit :

$D_{TE}$=2 x Re1' + d1' + 2 x d2'+ 2 x d3' avec Re1' est le rayon d'enroulement de la couche interne du toron externe, avec

- si la couche interne du toron externe contient 1 seul fil métallique interne: Re1'= 0;
- Sinon, Re1'= 1/[( $sin^2(π/Q')$/d1'/2)$^2$-$cos^2(π/Q')$ x (2 π/p1')$^2$]

avec Q' : le nombre de fils métalliques de la couche interne du toron externe, d1' le diamètre des fils métalliques de la couche interne du toron externe en mm et le pas p1' est le pas de la couche interne du toron externe en mm.

Ensuite on calcule la distance AB dans un repère selon la formule suivante : AB= [(xb-xa)$^2$ + (yb-ya)$^2$]$^{1/2}$ et on trouve ensuite la distance intertorons en μm : E=AB-$D_{TE}$/ cos (αt) x 1000 avec $D_{TE}$ le diamètre du toron externe et αt= atan (2 π ReTE /pe) c'est l'angle d'hélice du toron externe, avec pe est le pas exprimé en millimètres suivant lequel chaque toron externe est enroulé.

Par opposition, une couche de câble désaturée est telle que la distance inter-torons des torons externes est supérieure ou égale à 20 μm.

Avantageusement, la couche externe du toron interne est désaturée.

Par définition, une couche désaturée est telle qu'il existe suffisamment d'espace entre les fils de façon à permettre le passage d'une composition polymérique, de préférence élastomérique. Une couche désaturée signifie que les fils ne se touchent pas et qu'il y a suffisamment d'espace entre deux fils adjacents permettant le passage d'une composition polymérique, de préférence élastomérique. Par opposition, une couche saturée est telle qu'il n'existe pas suffisamment d'espace entre les fils de la couche pour permettre le passage d'une composition polymérique, de préférence élastomérique, par exemple car les fils de la couche se touchent deux à deux.

Par définition, la distance interfils d'une couche est définie, sur une section du câble perpendiculaire à l'axe principal du câble, comme la distance la plus courte qui sépare, en moyenne, deux fils adjacents de la couche.

La distance interfils de la couche est calculée comme suit :

On calcule le rayon d'enroulement des couches externes des torons externes :

$$Re3'=Re1'+d1'/2+d2' + d3'/2$$

avec Re1' est le rayon d'enroulement de la couche interne du toron externe tel que défini précédemment.

La distance interfils l3' est la distance entre 2 centres de fils métalliques moins le diamètre fil telle que présentée sur la figure 7, le mode de calcul est le même que celui pour les torons externes:

$$A'= [Re_{3'}, 0]$$

$$B'= [Re_{3'} \times \cos (2\pi/N') ; Re3' \times \sin( 2\pi/N')]$$

$$A'B'=[ (xb'-xa')^2 + (yb'-ya')^2]^{1/2}$$

On trouve ainsi I3'= A'B'-d3'/cos($\alpha$C3') x 1000 avec $\alpha$C3' = atan(2 $\pi$ R3'/p3') est l'angle d'hélice de la couche externe du toron externe.

La somme SI3' est la somme des distances interfils séparant chaque couple de fils externes adjacents de la couche externe.

La distance interfils I2' est la distance entre 2 centres de fils métalliques intermédiaire moins le diamètre fil. Le calcul est le même que celui précédemment décrit.

La somme SI2' est la somme des distances interfils séparant chaque couple de fils intermédiaires adjacents de la couche externe.

De préférence, les torons ne subissent pas de préformation.

Avantageusement, la distance interfils de la couche externe du toron interne est supérieure ou égale à 5 $\mu$m. De préférence, la distance interfils de la couche externe du toron interne est supérieure ou égale à 15 $\mu$m, plus préférentiellement supérieure ou égale à 35 $\mu$m, encore plus préférentiellement supérieure ou égale à 50 $\mu$m et très préférentiellement supérieure ou égale à 60 $\mu$m.

De préférence, la distance interfils de la couche externe du toron interne est inférieure ou égale à 100$\mu$m.

Avantageusement, la somme SI3 des distances interfils I3 de la couche externe du toron interne est supérieure au diamètre d3 des fils externes de la couche externe.

Avantageusement, chaque toron est du type non gommé in situ. Par non gommé in situ, on entend qu'avant assemblage des torons entre eux, chaque toron est constitué des fils des différentes couches et dépourvu de composition polymérique, notamment de composition élastomérique.

Avantageusement, la couche externe de chaque toron externe est désaturée.

Avantageusement, la distance interfils de la couche externe de chaque toron externe est supérieure ou égale à 5 $\mu$m. De préférence, la distance interfils de la couche externe de chaque toron externe est supérieure ou égale à 15 $\mu$m, plus préférentiellement supérieure ou égale à 35 $\mu$m, encore plus préférentiellement supérieure ou égale à 50 $\mu$m et très préférentiellement supérieure ou égale à 60 $\mu$m.

De préférence, la distance interfils de la couche externe de chaque toron externe est inférieure ou égale à 100 $\mu$m.

Avantageusement, la somme SI3' des distances interfils I3' de la couche externe de chaque toron externe est supérieure ou égale au diamètre d3' des fils externes de la couche externe.

De préférence, chaque fil métallique interne du toron interne présente un diamètre d1 supérieur ou égal au diamètre d3 de chaque fil métallique externe du toron interne, de préférence 1,00 $\leq$ d1/d3 $\leq$ 1,20.

De préférence, chaque fil métallique interne de chaque toron externe présente un diamètre d1' supérieur ou égal au diamètre d2' de chaque fil métallique externe de chaque toron externe, de préférence 1,00 $\leq$ d1'/d2' $\leq$ 1,20.

De préférence, chaque fil métallique interne de chaque toron externe présente un diamètre d1' supérieur ou égal au diamètre d3' de chaque fil métallique externe de chaque toron externe , de préférence 1,00 $\leq$ d1'/d3' $\leq$ 1,20.

De préférence, d1, d1', d2', d3, d3' vont, indépendamment les uns des autres, de 0,12 mm à 0, 40 mm et de préférence de 0,15 mm à 0,38 mm.

Dans un mode de réalisation, chaque fil interne présente un diamètre d1 supérieur ou égal respectivement au diamètre d3 de chaque fil externe. L'utilisation de diamètres tels que d1>d3 permet de favoriser la pénétrabilité de la composition polymérique, par exemple de la composition élastomérique, au travers de la couche externe. Dans un autre mode de réalisation où d1=d3, on peut limiter le nombre de fils différents à gérer lors de la fabrication du câble.

De préférence, la couche externe du toron interne est enroulée autour de la couche interne du toron interne au contact de la couche interne du toron interne.

Avantageusement, L=6, 7 ou 8 de préférence L=6 ou 7 et plus préférentiellement L=6.

De préférence, K=1 et L=6. Dans le câble dans lequel K=1, les efforts transversaux les plus sévères sont les efforts transversaux exercés par les torons externes sur le toron interne.

Toron interne du câble selon l'invention

Dans un mode de réalisation préféré, Q>1, de préférence Q=2, 3 ou 4. Dans le cas où Q serait égal à 1, il existerait un risque de voir, sous l'effet des efforts répétés de compression appliqués au câble, le fil interne du toron interne sortir radialement du toron interne et même du câble. Grâce à la présence de plusieurs fils dans la couche interne du toron interne (Q>1), on réduit ce risque, les efforts de compression étant alors répartis sur la pluralité de fils de la couche interne.

Avantageusement, N =7, 8, 9 ou 10 et de préférence N=8 ou 9.

Dans une première variante, Q=2 et N=7 ou 8, de préférence Q=2, N=7.

Dans une deuxième variante, Q=3 et N=7, 8 ou 9, de préférence Q=3, N=8.

Dans une troisième variante, Q=4 et N=7, 8,9 ou 10, de préférence Q=4, N=9.

Très avantageusement, chaque fil interne du toron interne présente un diamètre d1 égal au diamètre d3 de chaque fil externe du toron interne. Ainsi, on utilise préférentiellement le même diamètre de fil sur les couches interne et externe du toron interne ce qui limite le nombre de fils différents à gérer lors de la fabrication du câble.

Torons externes du câble selon l'invention

Dans un mode de réalisation, Q'=1.

Avantageusement, M'=3, 4, 5 ou 6 et de préférence M'=4, 5 ou 6.

Avantageusement, N'=9, 10, 11 ou 12 et de préférence N'= 9, 10 ou 11.

Dans un autre mode de réalisation préféré, Q'>1, de préférence Q'=2, 3 ou 4.

Avantageusement, M'=7, 8, 9 ou 10 et de préférence M'=7, 8 ou 9.

Avantageusement, N'=12, 13, 14 ou 15 et de préférence N'= 12, 13 ou 14.

Dans une première variante, Q'=2, M'=7 ou 8 et N'=12 ou 13.

Dans une deuxième variante, Q'=3, M'=8 ou 9 et N'=13 ou 14, de préférence Q'=3, M'=9 et N'=14.

Dans une troisième variante, Q'=4, M'=9 ou 10 et N'= 12, 13 ou 14.

Très avantageusement, chaque fil intermédiaire du toron externe présente un diamètre d2' égal au diamètre d3' de chaque fil externe du toron externe. Ainsi, on utilise préférentiellement le même diamètre de fil sur les couches intermédiaire et externe du toron externe ce qui limite le nombre de fils différents à gérer lors de la fabrication du câble.

Dans un arrangement préféré, Q=4, N=9, Q'=1, M'=4 et N'=9, et d1=d3, d2'=d3' et d3' ≤d1'.

Dans un autre arrangement préféré, Q=4, N=9, Q'=1, M'=6 et N'=11, d1=d3 et d1'>d3'.

## PRODUIT RENFORCE SELON L'INVENTION

Un autre objet de l'invention est un produit renforcé comprenant une matrice polymérique et au moins un câble ou câble extrait tel que défini précédemment.

Avantageusement, le produit renforcé comprend un ou plusieurs câbles selon l'invention noyés dans la matrice polymérique, et dans le cas de plusieurs câbles, les câbles sont agencés côte à côte selon une direction principale.

## PNEUMATIQUE SELON L'INVENTION

Un autre objet de l'invention est un pneumatique comprenant au moins un câble extrait ou un produit renforcé tel que défini ci-dessus.

Par pneumatique comprenant un câble extrait, on entend un pneumatique comprenant un câble dont les propriétés, mesurées après extraction du pneumatique, sont celles du câble extrait, ce câble étant, préalablement à son incorporation au pneumatique, un câble tel que le câble décrit précédemment.

De préférence, le pneumatique comporte une armature de carcasse ancrée dans deux bourrelets et surmontée radialement par une armature de sommet elle-même surmontée d'une bande de roulement, l'armature de sommet étant réunie auxdits bourrelets par deux flancs et comportant au moins un câble tel que défini ci-dessus.

Dans un mode de réalisation préféré, l'armature de sommet comprend une armature de protection et une armature de travail, l'armature de travail comprenant au moins un câble tel que défini ci-dessus, l'armature de protection étant radialement intercalée entre la bande de roulement et l'armature de travail.

Le câble est tout particulièrement destiné à des véhicules industriels choisis parmi des véhicules lourds tels que "Poids lourd" - i.e., métro, bus, engins de transport routier (camions, tracteurs, remorques), véhicules hors-la-route -, engins agricoles ou de génie civil, autres véhicules de transport ou de manutention.

De manière préférentielle, le pneumatique est pour véhicule de type génie civil. Ainsi, le pneumatique présente une dimension dans laquelle le diamètre, en pouces, du siège de la jante sur laquelle le pneumatique est destiné à être monté est supérieur ou égal à 40 pouces.

L'invention concerne également un article de caoutchouc comprenant un assemblage selon l'invention, ou un assemblage imprégné selon l'invention. Par article de caoutchouc, on entend tout type d'article de caoutchouc tel qu'un ballon, un objet non pneumatique tel qu'un bandage non pneumatique, une bande transporteuse ou une chenille.

L'invention sera mieux comprise à la lecture des exemples qui vont suivre, donnés uniquement à titre d'exemples

EP 4 334 523 B1

non limitatifs et faite en se référant aux dessins dans lesquels :

- la figure 1 est une vue en coupe perpendiculaire à la direction circonférentielle d'un pneumatique selon l'invention ;
- la figure 2 est une vue de détails de la zone II de la figure 1 ;
- la figure 3 est une vue en coupe d'un produit renforcé selon l'invention ;
- la figure 4 est une vue schématique en coupe perpendiculaire à l'axe du câble (supposé rectiligne et au repos) d'un câble (50) selon un mode de réalisation de l'invention ;
- la figure 5 une vue schématique en coupe perpendiculaire à l'axe du câble (supposé rectiligne et au repos) d'un câble extrait (50') selon un mode de réalisation de l'invention ;
- la figure 6 est une représentation schématique de l'angle $\alpha$f du câble (50) de la figure 4 ;et
- la figure 7 est une vue schématique de différents paramètres géométriques du câble.

**EXEMPLE DE PNEUMATIQUE SELON L'INVENTION**

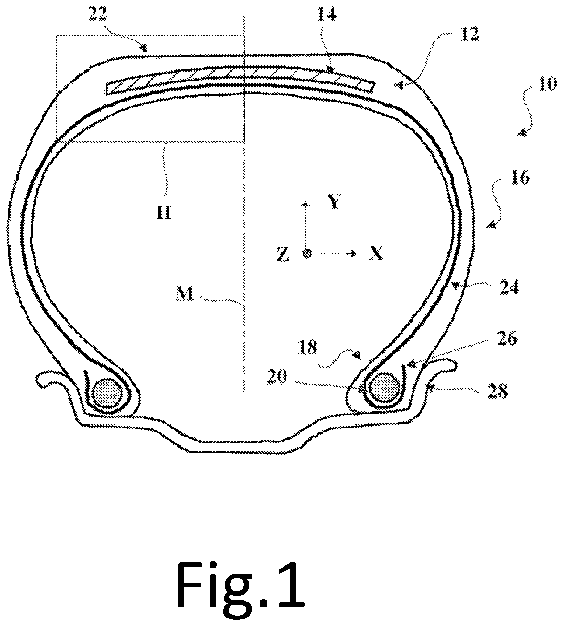

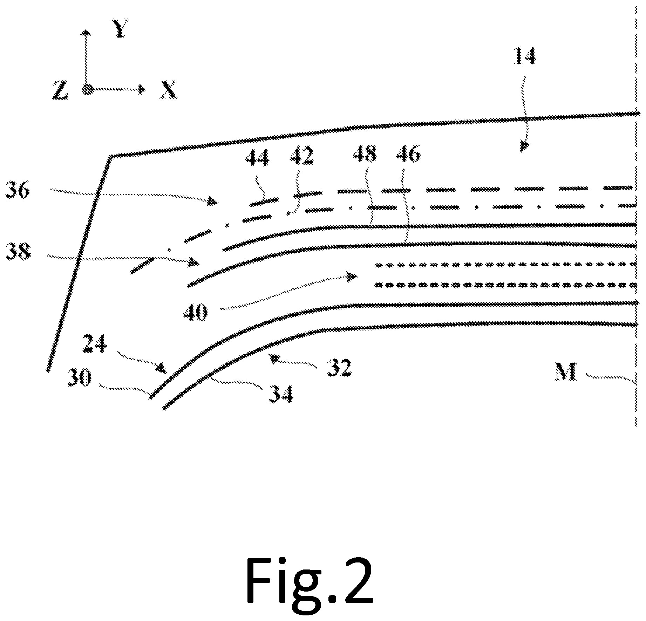

Dans les figures 1 et 2, on a représenté un repère X, Y, Z correspondant aux orientations habituelles respectivement axiale (X), radiale (Y) et circonférentielle (Z) d'un pneumatique.

Le « plan circonférentiel médian » M du pneumatique est le plan qui est normal à l'axe de rotation du pneumatique et qui se situe à équidistance des structures annulaires de renfort de chaque bourrelet.

On a représenté sur les figures 1 et 2 un pneumatique selon l'invention et désigné par la référence générale 10.

Le pneumatique 10 est pour véhicule lourd de type génie civil, par exemple de type « dumper ». Ainsi, le pneumatique 10 présente une dimension de type 53/80R63.

Le pneumatique 10 comporte un sommet 12 renforcé par une armature de sommet 14, deux flancs 16 et deux bourrelets 18, chacun de ces bourrelets 18 étant renforcé avec une structure annulaire, ici une tringle 20. L'armature de sommet 14 est surmontée radialement d'une bande de roulement 22 et réunie aux bourrelets 18 par les flancs 16. Une armature de carcasse 24 est ancrée dans les deux bourrelets 18, et est ici enroulée autour des deux tringles 20 et comprend un retournement 26 disposé vers l'extérieur du pneumatique 20 qui est ici représenté monté sur une jante 28. L'armature de carcasse 24 est surmontée radialement par l'armature de sommet 14.

L'armature de carcasse 24 comprend au moins une nappe de carcasse 30 renforcée par des câbles de carcasse radiaux (non représentés). Les câbles de carcasse sont agencés sensiblement parallèlement les uns aux autres et s'étendent d'un bourrelet 18 à l'autre de manière à former un angle compris entre 80° et 90° avec le plan circonférentiel médian M (plan perpendiculaire à l'axe de rotation du pneumatique qui est situé à mi-distance des deux bourrelets 18 et passe par le milieu de l'armature de sommet 14).

Le pneumatique 10 comprend également une nappe d'étanchéité 32 constituée d'un élastomère (communément appelée gomme intérieure) qui définit la face radialement interne 34 du pneumatique 10 et qui est destinée à protéger la nappe de carcasse 30 de la diffusion d'air provenant de l'espace intérieur au pneumatique 10.

L'armature de sommet 14 comprend, radialement de l'extérieur vers l'intérieur du pneumatique 10, une armature de protection 36 agencée radialement à l'intérieur de la bande de roulement 22, une armature de travail 38 agencée radialement à l'intérieur de l'armature de protection 36 et une armature additionnelle 40 agencée radialement à l'intérieur de l'armature de travail 38. L'armature de protection 36 est ainsi radialement intercalée entre la bande de roulement 22 et l'armature de travail 38. L'armature de travail 38 est radialement intercalée entre l'armature de protection 36 et l'armature additionnelle 40.

L'armature de protection 36 comprend des première et deuxième nappes de protection 42, 44 comprenant des câbles métalliques de protection, la première nappe 42 étant agencée radialement à l'intérieur de la deuxième nappe 44. De façon optionnelle, les câbles métalliques de protection font un angle au moins égal à 10°, de préférence allant de 10° à 35° et préférentiellement de 15° à 30° avec la direction circonférentielle Z du pneumatique.

L'armature de travail 38 comprend des première et deuxième nappes de travail 46, 48, la première nappe 46 étant agencée radialement à l'intérieur de la deuxième nappe 48. Chaque nappe 46, 48 comprend au moins un câble 50. De façon optionnelle, les câbles métalliques 50 de travail sont croisés d'une nappe de travail à l'autre et font un angle au plus égal à 60°, de préférence allant de 15° à 40° avec la direction circonférentielle Z du pneumatique.

L'armature additionnelle 40, également appelée bloc limiteur, dont la fonction est de reprendre en partie les sollicitations mécaniques de gonflage, comprend, par exemple et de façon connue en soi, des éléments de renfort métalliques additionnels, par exemple tels que décrits dans FR 2 419 181 ou FR 2 419 182 faisant un angle au plus égal à 10°, de préférence allant de 5° à 10° avec la direction circonférentielle Z du pneumatique 10.

**EXEMPLE DE PRODUIT RENFORCE SELON L'INVENTION**

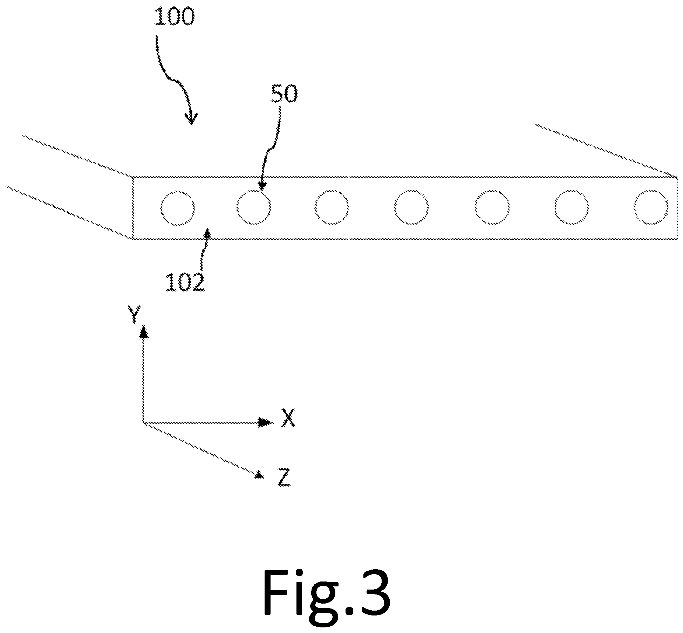

On a représenté sur la figure 3 un produit renforcé selon l'invention et désigné par la référence générale 100. Le produit renforcé 100 comprend au moins un câble 50, en l'espèce plusieurs câbles 50, noyés dans la matrice polymérique 102.

Sur la figure 3, on a représenté la matrice polymérique 102, les câbles 50 dans un repère X, Y, Z dans lequel la direction Y est la direction radiale et les directions X et Z sont les directions axiale et circonférentielle. Sur la figure 3, le produit renforcé 100 comprend plusieurs câbles 50 agencés côte à côte selon la direction principale X et s'étendant parallèlement les uns aux autres au sein du produit renforcé 100 et noyés collectivement dans la matrice polymérique 102. Ici, la matrice polymérique 102 est une matrice élastomérique à base d'une composition élastomérique.

## CABLE SELON UN MODE DE REALISATION DE L'INVENTION

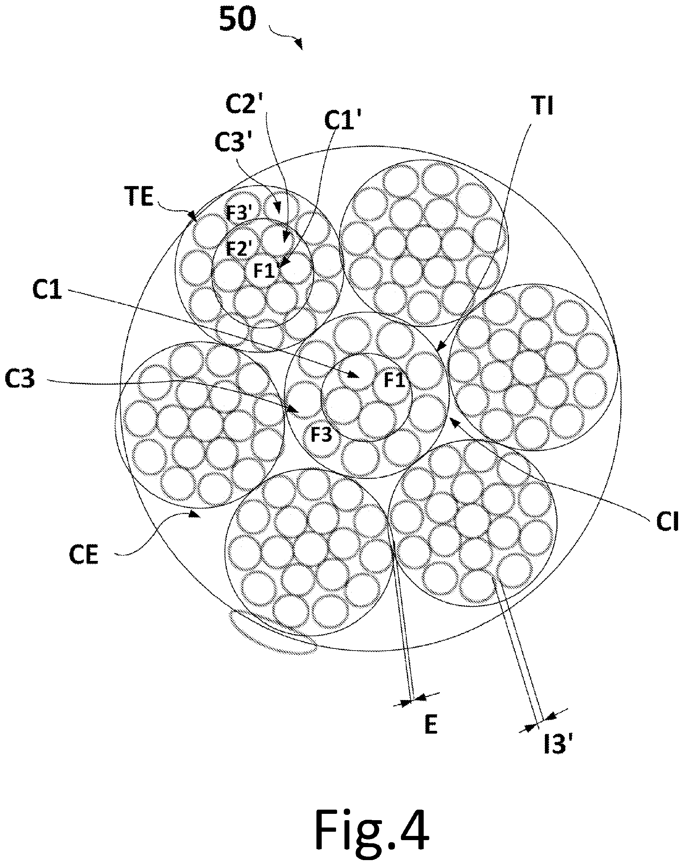

On a représenté sur la figure 4 le câble 50 selon un premier mode de réalisation de l'invention.

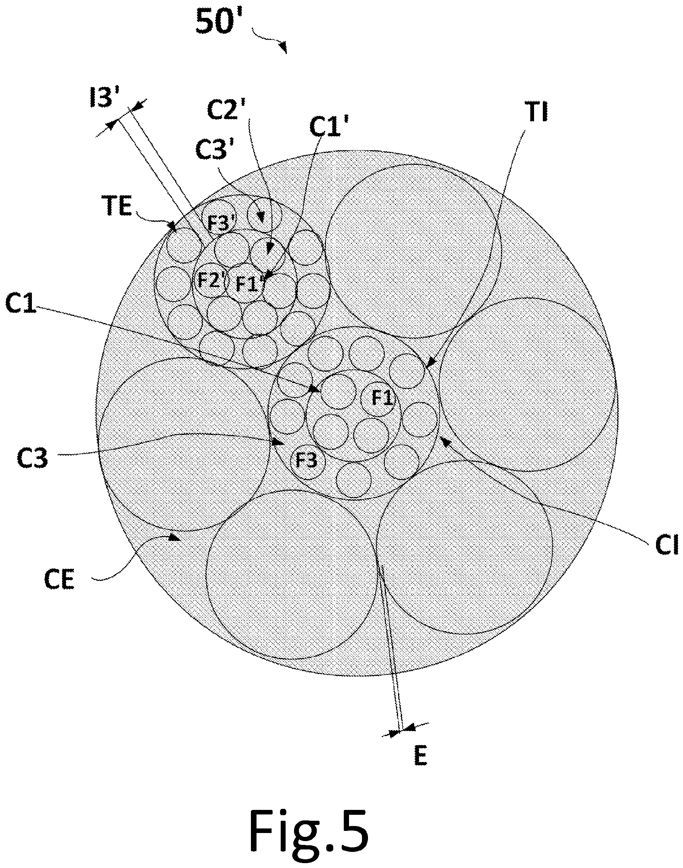

En référence à la figure 5, chaque élément de renfort de protection 43, 45 et chaque élément de renfort de frettage 53, 55 est formé, après extraction du pneumatique 10, par un câble extrait 50' tel que décrit ci-dessous. Le câble 50 est obtenu par noyage dans une matrice polymérique, en l'espèce dans une matrice polymérique formant respectivement chaque matrice polymérique de chaque nappe de protection 42, 44 et de chaque couche de frettage 52, 54 dans laquelle sont noyés respectivement les éléments de renfort de protection 43, 45 et de frettage 53, 55.

Le câble 50 et le câble extrait 50' sont métalliques et du type multi-torons à deux couches cylindriques. Ainsi, on comprend que les couches de torons constituant le câble 50 ou 50' sont au nombre de deux, ni plus, ni moins.

Le câble 50 ou le câble 50' comprend une couche interne CI du câble constituée de K=1 toron interne TI. La couche externe CE est constituée de L>1 torons externes TE enroulés autour de la couche interne CI du câble. En l'espèce, L=6, 7 ou 8, de préférence L=6 ou 7 et plus préférentiellement L=6 et ici L=6.

Le câble 50 présente une énergie à rupture surfacique :

$$\text{ES} = \sum_{i=1}^{Nc} F_{mi} \times \sum_{i=1}^{Nc} A_{ti} / Nc \times \text{Cfrag} / D = ((13 \times 401 + 6 \times 380 + 6 \times (6+11) \times 330) \times$$

$$0{,}025 \left(1 - \left(\frac{\sin(11{,}3\,\pi/180)}{0{,}40 \times 0{,}35} \times \frac{(6 \times 380 + 6 \times (6+11) \times 330) \times \sin(8\pi/180)}{9 \times 1500}\right)\right))/5{,}26 = (13 \times 401 + 6 \times 380 + 6$$

$$\times (6+11) \times 330) \times 0{,}025 \times 0{,}914/5{,}26 = 179 \text{ N. mm}^{-1}.$$

Avec

$$Nc = Q + N + L \times (Q' + M' + N') = 4 + 9 + 6 \times (1 + 6 + 11) = 121$$

$$\sum_{i=1}^{Nc} A_{ti} / Nc = 0{,}0250$$

$$\text{Fr} = \sum_{i=1}^{Nc} F_m \times \text{Cfrag} = (13 \times 401 + 6 \times 380 + 6 \times (6+11) \times 330) \times 0{,}914 = 37601 \text{ N.}$$

Le câble 50 comprend également une frette F non représentée constituée d'un unique fil de frette.

Le câble extrait 50' présente une énergie à rupture surfacique :

$$\text{E S} = \sum_{i=1}^{Nc} F_{mi} \times \sum_{i=1}^{Nc} A_{ti} / Nc \times \text{Cfrag'} / D = ((13 \times 401 + 6 \times 380 + 6 \times (6+11) \times 330) \times$$

$$0{,}025 \left(1 - (2 - 0{,}8) \times \left(\frac{\sin(11{,}3\,\pi/180)}{0{,}40 \times 0{,}35} \times \frac{(6 \times 380 + 6 \times (6+11) \times 330) \times \sin(8\pi/180)}{9 \times 1500}\right)\right))/5{,}26 = (13 \times 401 + 6 \times$$

$$380 + 6 \times (6+11) \times 330) \times 0{,}025 \times 0{,}896/5{,}26 = 175 \text{ N. mm}^{-1}.$$

Pour calculer Cp, on détermine à l'aide d'un logiciel le ratio de la surface non métal sans composition polymérique sur la surface remplie de composition polymérique dans la zone de contact Scp entre les torons externes et le toron interne. Ici le ratio moyenné sur 10 coupes transverses est égal à 0,8.

$$\text{Fr'} = \sum_{i=1}^{Nc} F_m \times \text{Cfrag'} = 13 \times 401 + 6 \times 380 + 6 \times (6+11) \times 330) \times 0{,}896 = 36\,891\text{N.}$$

La couche externe des câbles 50 et 50' est saturée. Ainsi, la distance inter-torons E des torons externes est inférieure strictement à 20 $\mu$m. Ici E=0 $\mu$m.

$\alpha$f est supérieur ou égal à 0° et de préférence supérieur ou égal à 5° et inférieur ou égal à 25° et de préférence inférieur ou égal à 20°. Ici $\alpha$f = 11,3°.

$\alpha$t est supérieur ou égal à 0° et de préférence supérieur ou égal à 5° et inférieur ou égal à 20°, de préférence inférieur ou égal à 15° et plus préférentiellement inférieur ou égal à 10°. Ici $\alpha$t = 8°.

Torons internes TI des câbles 50 et 50'

Chaque toron interne TI est à deux couches et comprend une couche interne C1 constituée de Q= 2, 3 ou 4 fils métalliques internes F1 et une couche externe C3 constituée de N fils métalliques externes F3 enroulés autour de la couche interne C1.

Ici Q=4.

N =7, 8, 9 ou 10, et de préférence N=8 ou 9 ici N=9.

La couche externe C3 de chaque toron interne TI est désaturée. La distance interfils de la couche externe du toron interne est supérieure ou égale à 15 $\mu$m, plus préférentiellement supérieure ou égale à 35 $\mu$m, encore plus préférentiellement supérieure ou égale à 50 $\mu$m et très préférentiellement supérieure ou égale à 60 $\mu$m et ici égale à 61 $\mu$m. La somme SI3 des distances interfils I3 de la couche externe C3 est supérieure au diamètre d3 des fils externe F3 de la couche externe C3. Ici, la somme SI3= 0,061 x 9= 0,55 mm, valeur supérieure à d3=0,40 mm.

Chaque fil interne et externe de chaque toron interne TI présente respectivement un diamètre d1 et d3. Chaque fil métallique interne F1 de chaque toron interne TI présente un diamètre d1 supérieur ou égal au diamètre d3 de chaque fil métallique externe F3 de chaque toron interne TI, de préférence 1,00 ≤d1/d3≤1,20.

d1 et d3 vont, indépendamment l'un de l'autre, de 0,25 mm à 0,50 mm, de préférence de 0,30 mm à 0,45 mm et plus préférentiellement de 0,32 mm à 0,42 mm. Ici d1=d3=0,40mm.

Torons externes TE des câbles 50 et 50'

Chaque toron externe TE est à trois couches et comprend une couche interne C1' constituée de Q'= 1 fils métalliques internes F1', une couche intermédiaire C2' constituée de M' fils métalliques intermédiaires F2' enroulés autour de la couche interne C1' et une couche externe C3' constituée de N' fils métalliques externes F3' enroulés autour de la couche intermédiaire C2.

Avantageusement, M'=3, 4, 5 ou 6 et de préférence M'=4, 5 ou 6. Ici M'=6.

Avantageusement, N'=9, 10, 11 ou 12 et de préférence N'= 9, 10 ou 11. Ici N'=11.

La couche externe C3' de chaque toron externe TE est désaturée. Etant désaturée, la distance interfils I3' de la couche externe C3' séparant en moyenne les N' fils externes est supérieure ou égale à 5 $\mu$m. La distance interfils I3' de la couche externe de chaque toron externe est supérieure ou égale à 15 $\mu$m, plus préférentiellement supérieure ou égale à 35 $\mu$m et ici égale à 37 $\mu$m. La somme SI3' des distances interfils I3' de la couche externe C3' est supérieure au diamètre d3' des fils externes F3' de la couche externe C3'. Ici, la somme SI3'= 0,037 x 11= 0,41 mm, valeur supérieure à d3'=0,35 mm.

Chaque couche interne et externe C1', C3' de chaque toron externe TE est enroulée selon le même sens d'enroulement du câble et des couches interne et externe C1, C3 du toron interne TI. Ici le sens d'enroulement de chaque couche du câble et du câble est Z.

Chaque fil intermédiaire du toron externe présente un diamètre d2' égal au diamètre d3' de chaque fil externe du toron externe. Ainsi, on utilise préférentiellement le même diamètre de fil sur les couches intermédiaire et externe du toron externe ce qui limite le nombre de fils différents à gérer lors de la fabrication du câble.

d1', d2' et d3' vont, indépendamment l'un de l'autre, de 0,25 mm à 0,50 mm, de préférence de 0,30 mm à 0,45 mm et plus préférentiellement de 0,32 mm à 0,42 mm. Ici d1'=0,38 mm et d2'=d3'=0,35mm.

Les câble 50 et 50' sont tels que Q=4 et N=9 ; Q'= 1, M'=6 et N'=11.

Au moins 50% des fils métalliques, de préférence au moins 60%, plus préférentiellement au moins 70% des fils métalliques, et très préférentiellement chaque fil métallique du câble comprend une âme en acier présentant une composition conforme à la norme NF EN 10020 de septembre 2000 et un taux de carbone C > 0,80% et de préférence C ≥ 0,82 % et au moins 50% des fils métalliques, de préférence au moins 60%, plus préférentiellement au moins 70% des fils métalliques, et très préférentiellement chaque fil métallique du câble comprend une âme en acier présentant une composition conforme à la norme NF EN 10020 de septembre 2000 et un taux de carbone C ≤ 1,20% et de préférence C ≤ 1,10%. Ici chaque fil métallique comprend une âme en acier présentant une composition conforme à la norme NF EN 10020 de septembre 2000 et un taux de carbone C= 1%.

Chaque fil présente une résistance à la rupture, notée Rm, telle que 2500 ≤ Rm ≤ 3100 MPa. On dit de l'acier de ces fils qu'il est de grade SHT (« Super High Tensile »). D'autres fils peuvent être utilisés, par exemple des fils de grade inférieur, par exemple de grade NT (« Normal Tensile ») ou HT (« High Tensile »), comme des fils de grade supérieur, par exemple de grade UT (« Ultra Tensile ») ou MT (« Mega Tensile »).

## PROCEDE DE FABRICATION DU CABLE SELON L'INVENTION

Nous allons maintenant décrire un exemple de procédé de fabrication du câble muti-torons 50.

Chaque toron interne précédemment décrit est fabriqué selon des procédés connus comportant les étapes suivantes, opérées préférentiellement en ligne et en continu :

- tout d'abord, une première étape d'assemblage par câblage des Q= 4 fils internes F1 de la couche interne C1 au pas p1 et dans le sens Z pour former la couche interne C1 en un premier point d'assemblage ;
- suivie d'une deuxième étape d'assemblage par câblage ou retordage des N=9 fils externes F3 autour des Q fils internes F1 de la couche interne C1 au pas p3 et dans le sens Z pour former la couche externe C3 en un deuxième point d'assemblage;
- préférentiellement une étape d'équilibrage final des torsions.

Chaque toron externe précédemment décrit est fabriqué selon des procédés connus comportant les étapes suivantes, opérées préférentiellement en ligne et en continu:

- tout d'abord, une première étape d'assemblage par câblage des Q'= 1 fil interne F1' de la couche interne C1' au pas p1' et dans le sens Z pour former la couche interne C1' en un premier point d'assemblage ;
- suivie d'une deuxième étape d'assemblage par câblage ou retordage des M'=6 fils intermédiaires F2' autour du fil interne F1' de la couche interne C1' au pas p2' et dans le sens Z pour former la couche intermédiaire C2' en un deuxième point d'assemblage ;
- suivie d'une troisième étape d'assemblage par câblage ou retordage des N'=11 fils externes F3' autour des M' fils intermédiaires F2' de la couche intermédiaire C2' au pas p3' et dans le sens Z pour former la couche externe C3' en un troisième point d'assemblage ;
- préférentiellement une étape d'équilibrage final des torsions.

Par « équilibrage de torsion », on entend ici de manière bien connue de l'homme du métier l'annulation des couples de torsion résiduels (ou du retour élastique de de torsion) s'exerçant sur chaque fil du toron, dans la couche intermédiaire comme dans la couche externe.

Après cette étape ultime d'équilibrage de la torsion, la fabrication du toron est terminée. Chaque toron est enroulé sur une ou plusieurs bobines de réception, pour stockage, avant l'opération ultérieure d'assemblage par câblage des torons élémentaires pour l'obtention du câble multi-torons.

Pour la fabrication du câble multi-torons de l'invention, on procède de manière bien connue de l'homme du métier, par câblage ou retordage des torons précédemment obtenus, à l'aide de machines de câblage ou retordage dimensionnées pour assembler des torons.

Ainsi, on assemble les L torons externes TE autour du toron interne TI au pas pe et dans le sens Z pour former le câble 50. Eventuellement, dans une dernière étape d'assemblage, on enroule la frette F au pas pf dans le sens S autour de l'assemblage précédemment obtenu.

Le câble 50 est ensuite incorporé par calandrage à des tissus composites formés d'une composition connue à base de caoutchouc naturel et de noir de carbone à titre de charge renforçante, utilisée conventionnellement pour la fabrication des armatures de sommet de pneumatiques radiaux. Cette composition comporte essentiellement, en plus de l'élastomère et de la charge renforçante (noir de carbone), un antioxydant, de l'acide stéarique, une huile d'extension, du naphténate de cobalt en tant que promoteur d'adhésion, enfin un système de vulcanisation (soufre, accélérateur, ZnO).

Les tissus composites renforcés par ces câbles comportent une matrice de composition élastomérique formée de deux couches fines de composition élastomérique qui sont superposées de part et d'autre des câbles et qui présentent respectivement une épaisseur allant de 1 et 4 mm. Le pas de calandrage (pas de pose des câbles dans le tissu de composition élastomérique) va de 4 mm à 8 mm.

Ces tissus composites sont ensuite utilisés en tant que nappe de travail dans l'armature de sommet lors du procédé de fabrication du pneumatique, dont les étapes sont par ailleurs connues de l'homme du métier.

On a résumé dans le tableau 1 ci-dessous les caractéristiques pour les différents câbles 50 et 50'.

[Tableau 1]

| Câbles | | | 50 | 50' |
|---|---|---|---|---|
| TI | | Q/N | 4/9 | 4/9 |
| | | d1/d3 | 0,40/0,40 | 0,40/0,40 |
| | | sens C1/pas p1 (mm) | Z/10 | Z/10 |
| | | sens C3/pas p3 (mm) | Z/20 | Z/20 |
| | | l3(μm)/SI(mm) | 61/0,55 | 61/0,55 |
| TE | | Q'/M'/N' | 1/6/11 | 1/6/11 |
| | | d1'/d2'/d3' | 0,38/0,35/0,35 | 0,38/0,35/0,35 |
| | | sens C1'/pas p1' (mm) | S/inf | S/inf |
| | | sens C2'/pas p2' (mm) | S/10 | S/10 |
| | | sens C3'/pas p3' (mm) | S/14 | S/14 |
| | | l2'(μm)/SI2'(mm) | 8/0,05 | 8/0,05 |
| | | l3'(μm)/SI3'(mm) | 37/0,41 | 37/0,41 |
| Sens câble/pi/pe | | | Z/inf/80 | Z/inf/80 |
| K | | | 1 | 1 |
| L | | | 6 | 6 |
| E (μm) | | | 0 | 0 |
| Fm fils à 0,35mm (N) | | | 330 | 330 |
| Fm fils à 0,38 mm (N) | | | 380 | 380 |
| Fm fils à 0,40mm (N) | | | 401 | 401 |
| D (mm) | | | 5,26 | 5,26 |
| Moy At fils | | | 0,0250 | 0,0250 |
| $\alpha f$ (°) | | | 11,3 | 11,3 |
| $\alpha t$ (°) | | | 8,0 | 8,0 |
| Cfrag | | | 0,914 | - |
| Coeff pénétraton | | | - | 0,800 |
| Cfrag' | | | - | 0,896 |
| Fr (N) | | | 37601 | - |
| Fr' (N) | | | - | 36891 |
| ES (N.mm$^{-1}$) | | | 179 | - |
| ES'(N.mm$^{-1}$) | | | - | 175 |

**TESTS COMPARATIFS**

Evaluation de l'énergie de rupture surfacique

On a simulé différents câbles témoins et de l'état de la technique.
On a résumé dans le tableau 2, les caractéristiques du câble de l'état de la technique EDT (exemple 8 de WO2016017655) et du câble de l'état de la technique EDT' extrait.

[Tableau 2]

| Câbles | | | EDT | EDT' |
|---|---|---|---|---|
| | | Q/N | 3/8 | 3/8 |
| | | d1/d3 | 0,33/0,35 | 0,33/0,35 |
| TI | | sens C1/pas p1 (mm) | Z/10 | Z/10 |
| | | sens C3/pas p3 (mm) | Z/20 | Z/20 |
| | | l3($\mu$m)/SI3(mm) | 53/0,42 | 53/0,42 |
| TE | | Q'/N' | 3/9 | 3/9 |
| | | d1'/d3' | 0,29/0,29 | 0,29/0,29 |
| | | sens C1'/pas p1' (mm) | Z/10 | Z/10 |
| | | sens C3'/pas p3' (mm) | Z/20 | Z/20 |
| | | l3'($\mu$m)/SI3'(mm) | 21/0,19 | 21/0,19 |
| Sens câble/pi/pe | | | Z/inf/70 | Z/inf/70 |
| K | | | 1 | 1 |
| | | | 6 | 6 |
| E ($\mu$m) | | | 98 | 98 |
| Fm (N) | | | 223 | 223 |
| D (mm) | | | 3,7 | 3,7 |
| Moy At fils | | | 0,0253 | 0,0253 |
| Nc | | | 83 | 83 |
| $\alpha$f (°) | | | 13.4 | 13.4 |
| $\alpha$t (°) | | | 6,7 | 6,7 |
| Cfrag | | | 0.941 | - |
| Coeff pénétration | | | - | 1 |
| Cfrag' | | | - | 0.941 |
| Fr (N) | | | 17410 | - |
| Fr' (N) | | | - | 17410 |
| ES (N.mm$^{-1}$) | | | 118 | - |
| ES'(N.mm$^{-1}$) | | | - | 118 |

Les tableaux 1 et 2 montrent que, les câbles 50 et 50' présentent une énergie de rupture surfacique améliorée par rapport aux câbles de l'état de la technique EDT et EDT'. En effet, les câbles EDT et EDT' présentent un coefficient de fragilisation relativement élevé mais une force à rupture relativement faible entraînant une énergie de rupture surfacique insuffisante pour réduire le nombre de rupture et le nombre de perforation des câbles dans le pneumatique. Ainsi les câbles selon l'invention présentent une énergie à rupture surfacique ES $\geq$ 155 N.mm$^{-1}$ suffisamment élevée pour remédier à ces inconvénients.

L'invention ne se limite pas aux modes de réalisation précédemment décrits.

**Revendications**

1. Câble (50) multi-torons à deux couches, comprenant :

   - une couche interne (CI) du câble constituée de K=1 toron interne (TI) à deux couches (C1, C3) comprenant :

      - une couche interne (C1) constituée de Q=2,3 ou 4 fils métalliques internes (F1), et

- une couche externe (C3) constituée de N fils métalliques externes (F3) de diamètre d3 enroulés autour de la couche interne (C1),

- une couche externe (CE) du câble constituée de L>1 torons externes (TE) à trois couches (C1', C2', C3') enroulés autour de la couche interne (CI) du câble comprenant :

- une couche interne (C1') constituée de Q' fil(s) métallique(s) interne(s) (F1'),

- une couche intermédiaire ( C2') constituée de M' fils métalliques intermédiaires (F2') enroulés autour de la couche interne (C1'), et

- une couche externe (C3') constituée de N' fils métalliques externes (F3') de diamètre d3' enroulés autour de la couche intermédiaire (C2'),

**caractérisé en ce que**

le câble (50) présente une énergie à rupture surfacique ES ≥ 155 N.mm$^{-1}$ avec

$$ES= \sum_{i=1}^{Nc} F_{mi} \text{ x } \sum_{i=1}^{Nc} A_{ti} / Nc \text{ x Cfrag / D}$$

où:

- $\sum_{i=1}^{Nc} F_{mi}$ est la somme des forces à rupture pour les Nc fils en Newton;
- Nc = Q+N+L x(Q'+M'+N') est le nombre total de fils métalliques ;
- D est le diamètre du câble en mm ;
- $\sum_{i=1}^{Nc} A_{ti}$ est la somme de l'allongement total des Nc fils sans unité ;
- Cfrag est le coefficient de fragilisation du câble (50) sans unité avec

$$C_{frag} = 1 - \left( \frac{\sin(\alpha_f)}{d3 \times d3'} \times \frac{(\Sigma_{i=1}^{Q'+M'+N'} F_{mi}) \times \sin(\alpha t)}{N \times Cste} \right)$$

où :

d3 et d3' sont exprimés en mm,
$\alpha f$ est l'angle de contact entre les fils métalliques externes (F3) du toron interne (TI) et les fils métalliques externes (F3') des torons externes (TE) exprimé en radian,
$\alpha t$ est l'angle d'hélice de chaque toron externe (TE) exprimé en radian ;
l'allongement total At étant déterminé en appliquant la norme ASTM D2969-04 de 2014 ; et Cste = 1500 N.mm$^{-2}$.

2. Câble (50) selon la revendication précédente, dans lequel ES ≥ 160 N.mm$^{-1}$, de préférence ES ≥ 165 N.mm$^{-1}$ et plus préférentiellement ES ≥ 170 N.mm$^{-1}$.

3. Câble (50) selon l'une quelconque des revendications précédentes, présentant une force à rupture $Fr = \sum_{i=1}^{Nc} F_{mi}$ x Cfrag telle que Fr ≥ 25 000 N, de préférence Fr ≥ 26 000 N et plus préférentiellement Fr ≥ 28 000 N.

4. Câble extrait (50') d'une matrice polymérique, le câble extrait (50') comprenant :

- une couche interne (CI) du câble constituée de K=1 toron interne(TI) à deux couches (C1, C3) comprenant :

- une couche interne (C1) constituée de Q= 2, 3 ou 4 fils métalliques interne(s) (F1),et
- une couche externe (C3) constituée de N fils métalliques externes (F3) de diamètre d3 enroulés autour de la couche interne (C1),

- une couche externe (CE) du câble constituée de L>1 torons externes (TE) à trois couches (C1', C2', C3') enroulés autour de la couche interne (CI) du câble comprenant :

- une couche interne (C1') constituée de Q'=2, 3 ou 4 fil(s) métallique(s) interne(s) (F1'),

- une couche intermédiaire ( C2') constituée de M' fils métalliques intermédiaires (F2') enroulés autour de la couche interne (C1'), et

- une couche externe (C3') constituée de N' fils métalliques externes (F3') de diamètre d3' enroulés autour de la couche intermédiaire (C2'),

**caractérisé en ce que**

le câble extrait (50') présente une énergie à rupture ES' $\geq$ 150 N.mm$^{-1}$ avec

$$ES' = \sum_{i=1}^{Nc} F_{mi} \ \times \ \sum_{i=1}^{Nc} A_{ti} / Nc \ \times \ \text{Cfrag' / D}$$ où:

- $\sum_{i=1}^{Nc} F_{mi}$ est la somme des forces à rupture pour les Nc fils en Newton;
- Nc = Q+N+L x(Q'+M' + N') est le nombre total de fils métalliques ;
- D est le diamètre du câble en mm ;
- $\sum_{i=1}^{Nc} A_{ti}$ est la somme de l'allongement total des Nc fils sans unité ;
- Cfrag' est le coefficient de fragilisation du câble (50') sans unité avec

$$C_{frag}' = 1 - (2 - Cp) \times \left( \frac{\sin(\alpha_f)}{d3 \times d3'} \times \frac{(\sum_{i=1}^{Q'+M'+N'} F_{mi}) \times \sin(\alpha t)}{N \times \text{Cste}} \right)$$

où :

Cp est le coefficient de pénétrabilité du câble qui est calculé en opérant une coupe transversale du câble extrait à la scie et en réitérant cette opération dix fois pour obtenir dix coupes transversales sur lesquelles on va calculer un coefficient de pénétration Cp moyen ; d3 et d3' sont exprimés en mm,
$\alpha f$ est l'angle de contact entre les fils métalliques externes (F3) du toron interne (TI) et les fils métalliques externes (F3') des torons externes (TE) exprimé en radian,
$\alpha t$ est l'angle d'hélice des torons externes (TE) exprimé en radian;
l'allongement total At étant déterminé en appliquant la norme ASTM D2969-04 de 2014 ; et Cste = 1500 N.mm$^{-2}$.

5. Câble extrait (50') selon la revendication précédente, dans lequel ES' $\geq$ 155 N.mm$^{-1}$ et plus préférentiellement ES' $\geq$ 160 N.mm$^{-1}$.

6. Câble (50, 50') selon l'une quelconque des revendications précédentes, dans lequel le diamètre D du câble (50, 50') est tel que D $\leq$ 6,0 mm, de préférence tel que 5,0 mm $\leq$ D $\leq$ 5,5 mm.

7. Câble (50, 50') selon l'une quelconque des revendications précédentes, dans lequel $\alpha f$ est supérieur ou égal à 0° et de préférence supérieur ou égal à 5°.

8. Câble (50, 50') selon l'une quelconque des revendications précédentes, dans lequel $\alpha f$ est inférieur ou égal à 25° et de préférence inférieur ou égal à 20°.

9. Câble (50, 50') selon l'une quelconque des revendications précédentes, dans lequel $\alpha t$ est supérieur ou égal à 0° et de préférence supérieur ou égal à 5°.

10. Câble (50, 50') selon l'une quelconque des revendications précédentes, dans lequel $\alpha t$ est inférieur ou égal à 20°, de préférence inférieur ou égal à 15° et plus préférentiellement inférieur ou égal à 10°.

11. Câble (50, 50') selon l'une quelconque des revendications précédentes, dans lequel la couche externe (CE) du câble est saturée de sorte que la distance inter-torons des torons externes définie, sur une section du câble perpendiculaire à l'axe principal du câble (50), comme la distance la plus courte qui sépare, en moyenne, les enveloppes circulaires dans lesquelles sont inscrits deux torons externes (TE) adjacents soit inférieure strictement à 20 μm.

12. Câble (50, 50') selon l'une quelconque des revendications précédentes, dans lequel la couche externe (C3) du toron interne (TI) est désaturée.

13. Câble (50, 50') selon l'une quelconque des revendications précédentes, dans lequel la couche externe (C3') de chaque toron externe (TE) est désaturée.

14. Produit renforcé (100), **caractérisé en ce qu'**il comprend une matrice polymérique (102) et au moins un câble extrait (50') selon l'une quelconque des revendications 4 à 13.

15. Pneumatique (10), **caractérisé en ce qu'**il comprend au moins un câble extrait (50') selon l'une quelconque des revendications 4 à 13 ou un produit renforcé selon la revendication 14.

**Patentansprüche**

1. Mehrlitziges Seil (50) mit zwei Lagen, umfassend:

- eine innere Lage (CI) des Seils, die aus K = 1 inneren Litze (TI) mit zwei Lagen (C1, C3) besteht, umfassend:

- eine innere Lage (C1), die aus Q 2, 3 oder 4 inneren Metalldrähten (F1) besteht, und
- eine äußere Lage (C3), die aus N äußeren Metalldrähten (F3) mit einem Durchmesser d3 besteht, die um die innere Lage (C1) gewickelt sind,
- eine äußere Lage (CE) des Seils, die aus L > 1 äußeren Litzen (TE) mit drei Lagen (C1', C2', C3') besteht, die um die innere Lage (CI) des Seils gewickelt sind, umfassend:

- eine innere Lage (C1'), die aus Q' inneren Metalldrähten (F1') besteht,
- eine Zwischenlage (C2'), die aus M' Metallzwischendrähten (F2') besteht, die um die innere Lage (C1') gewickelt sind, und
- eine äußere Lage (C3'), die aus N' äußeren Metalldrähten (F3') mit einem Durchmesser d3' besteht, die um die Zwischenlage (C2') gewickelt sind,

**dadurch gekennzeichnet, dass**
das Seil (50) eine flächenbezogene Bruchenergie ES $\geq$ 155 N.mm$^{-1}$ mit

$$ES = \sum_{i=1}^{Nc} F_{mi} \times \sum_{i=1}^{Nc} A_{ti} / Nc \times Cfrag / D \qquad \text{aufweist,} \qquad \text{worin:}$$

- $\sum_{i=1}^{Nc} F_{mi}$ die Summe der Bruchkräfte für die Nc Drähte in Newton ist;
- Nc Q+N+L x(Q'+M'+N') die Gesamtzahl der Metalldrähte ist;
- D der Durchmesser des Seils in mm ist;

- $\sum_{i=1}^{Nc} A_{ti}$ die Summe der Gesamtdehnung der Nc Drähte ohne Einheit ist;
- Cfrag der Versprödungskoeffizient des Seils (50) ohne Einheit ist mit

$$C_{frag} = 1 - \left( \frac{\sin(\alpha_f)}{d3 \times d3'} \times \frac{\left( \sum_{i=1}^{Q'+M'+N'} F_{mi} \right) \times \sin(\alpha t)}{N \times Cste} \right),$$

worin:

d3 und d3' in mm ausgedrückt sind,
$\alpha f$ der Kontaktwinkel zwischen den äußeren Metalldrähten (F3) der inneren Litze (TI) und den äußeren Metalldrähten (F3') der äußeren Litzen (TE) ist, ausgedrückt in Radiant,
$\alpha t$ der Schlagwinkel jeder äußeren Litze (TE) ist, ausgedrückt in Radiant;
wobei die Gesamtdehnung At in Anwendung der Norm ASTM D2969-04 von 2014 bestimmt wird; und Cste = 1500 N.mm$^{-2}$ ist.

2. Seil (50) nach dem vorhergehenden Anspruch, wobei ES $\geq$ 160 N.mm$^{-1}$, bevorzugt ES $\geq$ 165 N.mm$^{-1}$ und noch bevorzugter ES $\geq$ 170 N.mm$^{-1}$.

3. Seil (50) nach einem der vorhergehenden Ansprüche, das eine derartige Bruchdehnung $Fr = \sum_{i=1}^{Nc} F_{mi} \; x \; Cfrag$ aufweist, dass Fr $\geq$ 25 000 N, bevorzugt Fr $\geq$ 26 000 N und noch bevorzugter Fr $\geq$ 28 000 N.

4. Aus einer Polymermatrix herausgezogenes Seil (50'), wobei das herausgezogene Seil (50') umfasst:

   - eine innere Lage (CI) des Seils, die aus K = 1 inneren Litze (TI) mit zwei Lagen (C1, C3) besteht, umfassend:

      - eine innere Lage (C1), die aus Q 2, 3 oder 4 inneren Metalldrähten (F1) besteht, und
      - eine äußere Lage (C3), die aus N äußeren Metalldrähten (F3) mit einem Durchmesser d3 besteht, die um die innere Lage (C1) gewickelt sind,
      - eine äußere Lage (CE) des Seils, die aus L > 1 äußeren Litzen (TE) mit drei Lagen (C1', C2', C3') besteht, die um die innere Lage (CI) des Seils gewickelt sind, umfassend:

         - eine innere Lage (C1'), die aus Q' = 2, 3 oder 4 inneren Metalldrähten (F1') besteht,
         - eine Zwischenlage (C2'), die aus M' Metallzwischendrähten (F2') besteht, die um die innere Lage (C1') gewickelt sind, und
         - eine äußere Lage (C3'), die aus N' äußeren Metalldrähten (F3') mit einem Durchmesser d3' besteht, die um die Zwischenlage (C2') gewickelt sind,

   **dadurch gekennzeichnet, dass**
   das herausgezogene Seil (50') eine Bruchenergie ES' $\geq$ 150 N.mm$^{-1}$ mit $ES' = \sum_{i=1}^{Nc} F_{mi} \; x \; \sum_{i=1}^{Nc} A_{ti} / Nc \; x \; Cfrag' \; / D$ aufweist, worin:

      - $\sum_{i=1}^{Nc} F_{mi}$ die Summe der Bruchkräfte für die Nc Drähte in Newton ist;
      - Nc = Q+N+L x(Q'+M' + N') die Gesamtzahl der Metalldrähte ist;
      - D der Durchmesser des Seils in mm ist;
      - $\sum_{i=1}^{Nc} A_{ti}$ die Summe der Gesamtdehnung der Nc Drähte ohne Einheit ist;
      - Cfrag' der Versprödungskoeffizient des Seils (50') ohne Einheit ist mit

$$C_{frag}' = 1 - (2 - Cp) \times \left( \frac{\sin(\alpha_f)}{d3 \times d3'} \times \frac{\left( \sum_{i=1}^{Q'+M'+N'} F_{mi} \right) \times \sin(\alpha t)}{N \times Cste} \right),$$

   worin:

      Cp der Durchdringbarkeitskoeffizient des Seils ist, der berechnet wird, indem ein Querschnitt des herausgezogenen Seils mit der Säge vorgenommen wird und dieser Vorgang zehn Mal wiederholt wird, um zehn Querschnitte zu erhalten, für die ein mittlerer Durchdringbarkeitskoeffizient Cp berechnet wird;
      d3 und d3' in mm ausgedrückt sind,
      $\alpha f$ der Kontaktwinkel zwischen den äußeren Metalldrähten (F3) der inneren Litze (TI) und den äußeren Metalldrähten (F3') der äußeren Litzen (TE) ist, ausgedrückt in Radiant,
      $\alpha t$ der Schlagwinkel der äußeren Litzen (TE) ist, ausgedrückt in Radiant;
      wobei die Gesamtdehnung At in Anwendung der Norm ASTM D2969-04 von 2014 bestimmt wird; und Cste = 1500 N.mm$^{-2}$ ist.

5. Herausgezogenes Seil (50') nach dem vorhergehenden Anspruch, wobei ES' $\geq$ 155 N.mm$^{-1}$ und noch bevorzugter ES' $\geq$ 160 N.mm$^{-1}$.

6. Seil (50, 50') nach einem der vorhergehenden Ansprüche, wobei der Durchmesser D des Seils (50, 50') derart ist, dass D $\leq$ 6,0 mm, bevorzugt 5,0 mm $\leq$ D $\leq$ 5,5 mm.

**7.** Seil (50, 50') nach einem der vorhergehenden Ansprüche, wobei αf größer oder gleich 0° und bevorzugt größer oder gleich 5° ist.

**8.** Seil (50, 50') nach einem der vorhergehenden Ansprüche, wobei αf kleiner oder gleich 25° und bevorzugt kleiner oder gleich 20° ist.

**9.** Seil (50, 50') nach einem der vorhergehenden Ansprüche, wobei αt größer oder gleich 0° und bevorzugt größer oder gleich 5° ist.

**10.** Seil (50, 50') nach einem der vorhergehenden Ansprüche, wobei αt kleiner oder gleich 20°, bevorzugt kleiner oder gleich 15° und noch bevorzugter kleiner oder gleich 10° ist.

**11.** Seil (50, 50') nach einem der vorhergehenden Ansprüche, wobei die äußere Lage (CE) des Seils gesättigt ist, so dass der Zwischenlitzenabstand der äußeren Litzen, der, über einen zur Hauptachse des Seils (50) senkrechten Querschnitt des Seils, als der kürzeste Abstand definiert ist, der im Durchschnitt die kreisförmigen Hüllen trennt, in die zwei benachbarte äußere Litzen (TE) einbeschrieben sind, strikt kleiner als 20 μm ist.

**12.** Seil (50, 50') nach einem der vorhergehenden Ansprüche, wobei die äußere Lage (C3) der inneren Litze (TI) ungesättigt ist.

**13.** Seil (50, 50') nach einem der vorhergehenden Ansprüche, wobei die äußere Lage (C3') jeder äußeren Litze (TE) ungesättigt ist.

**14.** Verstärktes Produkt (100), **dadurch gekennzeichnet, dass** es eine Polymermatrix (102) und mindestens ein herausgezogenes Seil (50') nach einem der Ansprüche 4 bis 13 umfasst.

**15.** Reifen (10), **dadurch gekennzeichnet, dass** er mindestens ein herausgezogenes Seil (50') nach einem der Ansprüche 4 bis 13 oder ein verstärktes Produkt nach Anspruch 14 umfasst.

**Claims**

**1.** Two-layer multi-strand cord (50) comprising:

- an internal layer (CI) of the cord made up of K=1 internal strand (TI) having two layers (C1, C3) comprising:

- an internal layer (C1) made up of Q=2, 3 or 4 internal metallic threads (F1), and
- an external layer (C3) made up of N external metallic threads (F3) of diameter d3 wound around the internal layer (C1),
- an external layer (CE) of the cord made up of L>1 external strands (TE) having three layers (C1', C2', C3') wound around the internal layer (CI) of the cord, comprising:

- an internal layer (C1') made up of (a) Q' internal metallic thread(s) (F1'),
- an intermediate layer (C2') made up of M' intermediate metallic threads (F2') wound around the internal layer (C1'), and
- an external layer (C3') made up of N' external metallic threads (F3') of diameter d3' wound around the intermediate layer (C2'),

**characterized in that**
the cord (50) has an energy-to-break per unit area ES $\geq$ 155 N.mm$^{-1}$ with

$$ES= \sum_{i=1}^{Nc} F_{mi} \text{ x } \sum_{i=1}^{Nc} A_{ti} / Nc \text{ x Cfrag} / D$$

where:

- $\sum_{i=1}^{Nc} F_{mi}$ is the sum of the forces at break for the Nc threads, in Newtons;
- Nc = Q+N+L x(Q'+M'+N') is the total number of metallic threads;
- D is the diameter of the cord, in mm;

- $\sum_{i=1}^{Nc} A_{ti}$ is the sum of the total elongation of the Nc threads, and is dimensionless;

- Cfrag is the dimensionless coefficient of weakening of the cord (50), with

$$C_{frag} = 1 - \left( \frac{\sin(\alpha_f)}{d3 \times d3\prime} \times \frac{(\Sigma_{i=1}^{Q\prime + M\prime + N\prime} F_{mi}) \times \sin(\alpha t)}{N \times Cste} \right)$$

where:

d3 and d3' are expressed in mm,
αf is the angle of contact between the external metallic threads (F3) of the internal strand (TI) and the external metallic threads (F3') of the external strands (TE), expressed in radians,
αt is the helix angle of each external strand (TE) expressed in radians;
the total elongation At being determined by applying standard ASTM D2969-04 from 2014; and
Cste = 1500 N.mm$^{-2}$.

2. Cord (50) according to the preceding claim, wherein ES ≥ 160 N.mm$^{-1}$, preferably ES ≥ 165 N.mm$^{-1}$ and more preferably ES ≥ 170 N.mm$^{-1}$.

3. Cord (50) according to either one of the preceding claims, exhibiting a force at break $Fr = \sum_{i=1}^{Nc} F_{mi}$ x Cfrag such that Fr ≥ 25 000 N, for preference Fr ≥ 26 000 N and more preferably Fr ≥ 28 000 N.

4. Cord (50') extracted from a polymer matrix, the extracted cord (50') comprising:

- an internal layer (CI) of the cord made up of K=1 internal strand (TI) having two layers (C1, C3) comprising:

- an internal layer (C1) made up of Q=2, 3 or 4 internal metallic threads (F1) and
- an external layer (C3) made up of N external metallic threads (F3) of diameter d3 wound around the internal layer (C1),
- an external layer (CE) of the cord made up of L>1 external strands (TE) having three layers (C1', C2', C3') wound around the internal layer (CI) of the cord, comprising:

- an internal layer (C1') made up of (a) Q' internal metallic thread(s) (F1'),
- an intermediate layer (C2') made up of M' intermediate metallic threads (F2') wound around the internal layer (C1'), and
- an external layer (C3') made up of N' external metallic threads (F3') of diameter d3' wound around the intermediate layer (C2'),

**characterized in that**
the extracted cord (50') has an energy-to-break ES' ≥ 150 N.mm$^{-1}$ with
$$ES' = \sum_{i=1}^{Nc} F_{mi} \text{ x } \sum_{i=1}^{Nc} A_{ti} \text{ / } Nc \text{ x Cfrag' / D}$$ where:

- $\sum_{i=1}^{Nc} F_{mi}$ is the sum of the forces at break for the Nc threads, in Newtons;
- Nc = Q+N+L x(Q'+M'+N') is the total number of metallic threads;
- D is the diameter of the cord, in mm;

- $\sum_{i=1}^{Nc} A_{ti}$ is the sum of the total elongation of the Nc threads, and is dimensionless;

- Cfrag' is the dimensionless coefficient of weakening of the cord (50'), with

$$C_{frag}\prime = 1 - (2 - Cp) \times \left( \frac{\sin(\alpha_f)}{d3 \times d3\prime} \times \frac{(\Sigma_{i=1}^{Q\prime + M\prime + N\prime} F_{mi}) \times \sin(\alpha t)}{N \times Cste} \right)$$

where:

Cp is the penetration coefficient for the cord which is calculated by performing a cross-sectional cut of the extracted cable using a saw, and repeating this operation ten times to obtain ten cross-sections on which an average penetration coefficient Cp is calculated;

d3 and d3' are expressed in mm,

$\alpha f$ is the angle of contact between the external metallic threads (F3) of the internal strand (TI) and the external metallic threads (F3') of the external strands (TE), expressed in radians,

$\alpha t$ is the helix angle of the external strands (TE), expressed in radians;

the total elongation At being determined by applying standard ASTM D2969-04 from 2014; and

Cste = 1500 N.mm$^{-2}$.

5. Extracted cord (50') according to the preceding claim, wherein ES' $\geq$ 155 N.mm$^{-1}$, and more preferably ES' $\geq$ 160 N.mm$^{-1}$.

6. Cord (50, 50') according to any one of the preceding claims, wherein the diameter D of the cord (50, 50') is such that D $\leq$ 6.0 mm, preferably such that 5.0 mm $\leq$ D $\leq$ 5.5 mm.

7. Cord (50, 50') according to any one of the preceding claims, wherein $\alpha f$ is greater than or equal to 0° and preferably greater than or equal to 5°.

8. Cord (50, 50') according to any one of the preceding claims, wherein $\alpha f$ is less than or equal to 25° and preferably less than or equal to 20°.

9. Cord (50, 50') according to any one of the preceding claims, wherein $\alpha t$ is greater than or equal to 0° and preferably greater than or equal to 5°.

10. Cord (50, 50') according to any one of the preceding claims, wherein $\alpha t$ is less than or equal to 20°, preferably less than or equal to 15° and more preferably less than or equal to 10°.

11. Cord (50, 50') according to any one of the preceding claims, in which the external layer (CE) of the cord is saturated such that the inter-strand distance for the external strands defined, on a cross section of the cord perpendicular to the main axis of the cord (50), as being the shortest distance separating, on average, the circular envelopes in which two adjacent external strands (TE) are inscribed, is strictly less than 20 $\mu$m.

12. Cord (50, 50') according to any one of the preceding claims, in which the external layer (C3) of the internal strand (TI) is desaturated.

13. Cord (50, 50') according to any one of the preceding claims, in which the external layer (C3') of each external strand (TE) is desaturated.

14. Reinforced product (100), **characterized in that** it comprises a polymer matrix (102) and at least one extracted cord (50') according to any one of Claims 4 to 13.

15. Tyre (10), **characterized in that** it comprises at least one extracted cord (50') according to any one of Claims 4 to 13 or a reinforced product according to Claim 14.

# Fig.1

Fig.2

Fig.3

Fig.4

Fig.5

Fig.6

# Fig.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016017655 A
- WO 2019243691 A
- FR 2419181
- FR 2419182